# EUROPÄISCHE PATENTANMELDUNG

(11) **EP 1 826 427 A1**
(43) Veröffentlichungstag der Anmeldung: **29.08.2007**
(21) Anmeldenummer: 07002879.0
(22) Anmeldetag: 10.02.2007
(51) Int. Cl.: F16D 1/08, F16H 41/24

(54) **Verbindungsanordnung**

(30) Priorität: 24.02.2006 DE 102006008614
(71) Anmelder: ZF FRIEDRICHSHAFEN AG, 88046 Friedrichshafen (DE)
(72) Erfinder: Schierling, Bernhard, 97273 Kürnach (DE); Weth, Jürgen, 97464 Niederwerrn (DE); Pagels, Olaf, 97493 Bergrheinfeld (DE); Matschas, Steffen, 97421 Schweinfurt (DE); Müller, Thorsten, 88046 Friedrichshafen (DE); Kleuker, Christoph, 97469 Gochsheim (DE); Peterseim, Michael, 97493 Bergrheinfeld (DE)

(57) **Zusammenfassung**

Eine Verbindungsanordnung dient zur drehfesten Koppelung zumindest zweier Komponenten eines Antriebsstranges eines Kraftfahrzeuges unter Verwendung von Befestigungselementen mit Längsachsen, deren Erstreckungsrichtung zumindest im wesentlichen mit jeweils einer Ebene zusammenfällt, die senkrecht zur Verlaufsrichtung einer Drehachse des Antriebsstranges ausgerichtet ist. Die Befestigungselemente weichen bezüglich der Erstreckungsrichtungen ihrer Längsachsen jeweils von der auf die Drehachse bezogenen Radialrichtung (RR) ab, und sind in einer vorbestimmten Anzahl der senkrecht zur Verlaufsrichtung (V) der Drehachse des Antriebsstranges ausgerichteten Ebenen angeordnet.

## Beschreibung

Die Erfindung bezieht sich auf eine Verbindungsanordnung gemäß dem Oberbegriff des Anspruches 1.

Eine derartige Verbindungsanordnung ist beispielsweise aus der DE 43 33 644 A1 bekannt, und dient zur drehfesten Koppelung zweier Komponenten eines Antriebsstranges, und zwar einer antriebsseitigen Komponente, gebildet durch eine Kurbelwelle einer als Antrieb dienenden Brennkraftmaschine, und einer abtriebsseitigen Komponente, gebildet durch eine Koppelvorrichtung in Form eines hydrodynamischen Drehmomentwandlers. Die antriebsseitige Komponente verfügt hierbei über einen Mitnehmer in Form einer an der Kurbelwelle befestigten Flexplatte, die abtriebsseitige Komponente dagegen über eine Mitnahmeeinrichtung in Form von am Gehäuse der Koppelvorrichtung vorgesehenen Halteklötzen. Zur Herstellung der Verbindung sind als Befestigungselemente dienende Schrauben vorgesehen, die als Durchgänge wirksame Bohrungen der Mitnehmer durchdringen, und in als Eingriffssicherungen wirksame Gewindegänge der Mitnahmeeinrichtung eingedreht werden. Die Längsachsen der Schrauben sind aufgrund einer radialen Erstreckungsrichtung auf eine für antriebs- und abtriebsseitige Komponente gemeinsame Drehachse des Antriebsstranges senkrecht ausgerichtet und daher in einer Ebene positioniert, die sich senkrecht zur Verlaufsrichtung der Drehachse ausdehnt.

Zwar beansprucht die Verbindungsanordnung durch die radiale Ausrichtung der Schrauben sowohl in Achs- als auch in Umfangsrichtung einen extrem geringen Bauraum, jedoch besteht das Risiko, dass bei Übertragung hoher Drehmomente über die Verbindungsanordnung ein Abscheren der Schrauben insbesondere in einem Bereich zwischen Mitnehmer und Mitnahmeelement und damit eine Zerstörung der Verbindungsanordnung erfolgt, und zwar insbesondere dann, wenn dem übertragenen Drehmoment Torsionsschwingungen der Kurbelwelle überlagert sind. Des weiteren besteht nicht immer an einem die Koppelvorrichtung umschließenden Getriebegehäuse die Möglichkeit, Durchgangsöffnungen für ein Montagewerkzeug derart vorzusehen, dass die Schrauben exakt in Radialrichtung einzudrehen und festzuziehen sind.

Eine weitere Verbindungsanordnung ist aus der EP 1 347 210 A1 bekannt, bei welcher Befestigungsmittel in Form von Schrauben unter einem vorbestimmten Winkel zur Drehachse des Antriebsstranges eingebracht werden, um einen Mitnehmer einer antriebsseitigen Komponente, gebildet durch eine elektrische Maschine, mit einer Mitnahmeeinrichtung einer abtriebsseitigen Komponente, wie einer Kopplungsvorrichtung in Form eines hydrodynamischen Drehmomentwandlers, in Wirkverbindung zu bringen. Der vorbestimmte Winkel ist bei dieser Verbindungsanordnung derart gewählt, dass die Längsachsen der Schrauben über eine Erstreckungsrichtung verfügen, bei welcher die Axialkomponente richtungsgleich mit der Verlaufsrichtung der Drehachse des Antriebsstranges ist.

Auch bei dieser Verbindungsanordnung benötigen die Schrauben in Umfangsrichtung zwar einen extrem geringen Bauraum, jedoch besteht bei Übertragung hoher Drehmomente insbesondere im Zusammenwirken mit Torsionsschwingungen ein Risiko für ein Abscheren der Schrauben zwischen Mitnehmer und Mitnahmeelement und damit für eine Zerstörung der Verbindungsanordnung.

Der Erfindung liegt die Aufgabe zugrunde, eine Verbindungsanordnung derart auszubilden, dass diese bei kompakter axialer Ausbildung in Umfangsrichtung belastbar ist, und auch eine gute Zugänglichkeit für Montagewerkzeuge an Befestigungselemente besteht.

Diese Aufgabe wird durch die Merkmale des Anspruches 1 gelöst. Von wesentlicher Bedeutung ist hierbei, dass bei der zur drehfesten Koppelung zumindest zweier Komponenten eines Antriebsstranges eines Kraftfahrzeuges dienenden erfindungsgemäßen Verbindungsanordnung Befestigungselementen mit Längsachsen vorgesehen sind, deren Erstreckungsrichtung zwar zumindest im wesentlichen mit jeweils einer Ebene zusammenfallen, die senkrecht zur Verlaufsrichtung einer Drehachse des Antriebsstranges ausgerichtet ist, jedoch hierbei jeweils eine Abweichung von auf die Drehachse bezogenen Radialrichtungen besteht. Die Befestigungselemente verfügen somit stets über eine Erstreckungsrichtung, bei welcher zumindest eine Bewegungskomponente in Umfangsrichtung vorhanden ist. Dadurch ergibt sich auch bei Übertragung höherer Drehmomente zwischen den beiden Komponenten des Antriebsstranges bei gleichzeitiger Einwirkung von Torsionsschwingungen, die von einem Antrieb, wie der Kurbelwelle einer Brennkraftmaschine stammen können, eine hinreichende Sicherheit gegen ein Abscheren der Befestigungselemente, und zwar insbesondere in einem Bereich zwischen einem Mitnehmer der antriebsseitigen Komponente des Antriebsstranges und einer Mitnahmeeinrichtung der abtriebsseitigen Komponente des Antriebsstranges.

Gleichzeitig kann durch Anordnung der Befestigungselemente in einer Mehrzahl der senkrecht zur Verlaufsrichtung der Drehachse des Antriebsstranges ausgerichteten Ebenen dafür gesorgt werden, dass sich auch dann eine höhere Sicherheit ergibt, wenn dem zu übertragenden Drehmoment Axialschwingungen überlagert sind. Derartige Axialschwingungen können sich in Form von Taumelbewegungen an zumindest einer Komponente des Antriebsstranges äußern.

Schließlich kann ein Winkel α, unter welchem sich die Längsachsen der Befestigungselemente jeweils, ausgehend von je einer auf die Drehachse bezogenen Tangentialrichtung, erstrecken, derart ausgewählt werden, dass für Montagewerkzeuge in einem Getriebegehäuse bestimmte Durchgänge derart positioniert werden können, dass ein ungehinderter Zugang zu den Befestigungselementen besteht. Sind die letztgenannten mit Vorzug als Schrauben ausgebildet, so können diese zur Herstellung der Verbindungsanordnung einen Durchgang im Mitnehmer passieren und nach Eingriff in eine in der Mitnahmeeinrichtung vorgesehene Eingriffssicherung in Form eines Gewindeganges durch das Montagewerkzeug eingedreht und festgezogen werden. Besonders vorteilhaft ist es hierbei, wenn die Erstreckungsrichtung der Befestigungselemente in Mitnehmer und Mitnahmeeinrichtung tangential zum Teilkreis der Befestigungselemente ausgerichtet ist. Ebenfalls vorteilhaft kann allerdings auch ein beliebiger Winkel α sein, insbesondere, wenn dieser die Drehachse des Antriebsstranges nicht schneidet.

Im Fall des beliebigen Winkels α ist dieser aus einem durch einen Minimalwert Wₘᵢₙ und einen Maximalwert Wₘₐₓ begrenzten Wertebereich WB beliebig auswählbar, wobei der Minimalwert Wₘᵢₙ von 0 Grad eine Übereinstimmung der Erstreckungsrichtung der jeweiligen Längsachse des Befestigungselementes mit der Tangentialrichtung TR erbringt, der Maximalwert mit einem Betrag von nahezu 90 Grad dagegen eine Annäherung der Erstreckungsrichtung der jeweiligen Längsachse des Befestigungselementes unmittelbar an die auf die Drehachse bezogene Radialrichtung RR.

Vorteilhafte Ausführungen für den Mitnehmer sowie für die Mitnahmeeinrichtung sind in den Ansprüchen angegeben. So ist mit Vorzug der Mitnehmer durch zumindest eine an der antriebsseitigen Komponente vorgesehene erste Anformung oder durch zumindest ein mit der antriebsseitigen Komponente drehfestes Ringsegment gebildet, die Mitnahmeeinrichtung dagegen durch eine an der abtriebsseitigen Komponente vorgesehene zweite Anformung, wobei diese Anformung integral an der entsprechenden Komponente vorgesehen sein kann. Die Drehverbindung zwischen dem Mitnehmer und der Mitnahmeeinrichtung erfolgt dann vorteilhafterweise durch formschlüssiges Ineingrifftreten zumindest in Umfangsrichtung.

Mit Vorzug kann die antriebsseitige Komponente durch einen Antrieb, wie die Kurbelwelle einer Brennkraftmaschine gebildet werden, oder aber durch einen elektrischen Generator. Die abtriebsseitige Komponente kann dagegen durch einen Torsionsschwingungsdämpfer, wie ein Zweimassen-Schwungrad, und/oder durch eine Kopplungsvorrichtung, wie einen hydrodynamischen Drehmomentwandler gebildet werden.

Die Erfindung ist nachfolgend anhand eines Ausführungsbeispiels erläutert. Es zeigt:
- Fig. 1: Eine antriebsseitigen Komponente und eine abtriebsseitige Komponente eines Antriebsstranges, verbunden durch Befestigungselemente mit tangentialer Erstreckungsrichtung, die in ein separates Verbindungssegment eingreifen;
- Fig. 2: einen Schnitt durch das Verbindungssegment gemäß der Schnittlinie II - II in Fig. 1;
- Fig. 3: wie Fig. 2, aber mit einem Schnitt gemäß der Schnittlinie III - III in Fig. 1;
- Fig. 4: wie Fig. 1, aber mit Anordnung der Befestigungselemente unter einem Winkel gegenüber einer tangentialen Erstreckungsrichtung; und
- Fig. 5: einen Schnitt durch das Verbindungssegment gemäß der Schnittlinie V - V in Fig. 4.

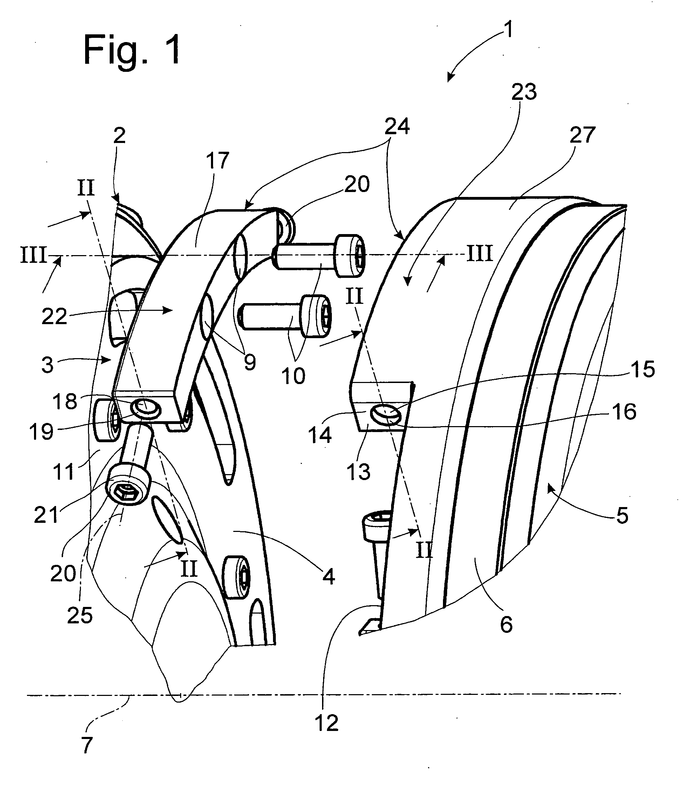

Eine erste Ausgestaltungsform einer erfindungsgemäßen Verbindungsanordnung 24 in einem Antriebsstrang 1 ist aus den Figuren 1 bis 3 erkennbar. Wie am besten aus Fig. 1 entnommen werden kann, verfügt der Antriebsstrang 1 über eine antriebsseitige Komponente 3 und über eine abtriebsseitige Komponente 5, die beide um eine zumindest im wesentlichen gleiche Drehachse 7 drehbar sind. Die antriebsseitige Komponente 3 dient im allgemeinen als Antrieb 2 und kann beispielsweise als Kurbelwelle einer Brennkraftmaschine ausgebildet sein, ist im vorliegenden Fall allerdings als elektrische Maschine 4 ausgeführt, wobei es sich um einen Generator einer Starter-Generator-Einheit handeln kann. Die abtriebsseitige Komponente 5 wird im vorliegenden Fall durch einen Torsionsschwingungsdämpfer 6 gebildet, wie beispielsweise ein Zweimassenschwungrad, jedoch ist ebenso die Ausführung als Kupplungsvorrichtung, beispielsweise in spezieller Ausführung als hydrodynamischer Drehmomentwandler, denkbar. Wesentlich für den erfindungsgemäßen Antriebsstrang 1 ist die nachfolgend beschriebene Verbindungsanordnung 24.

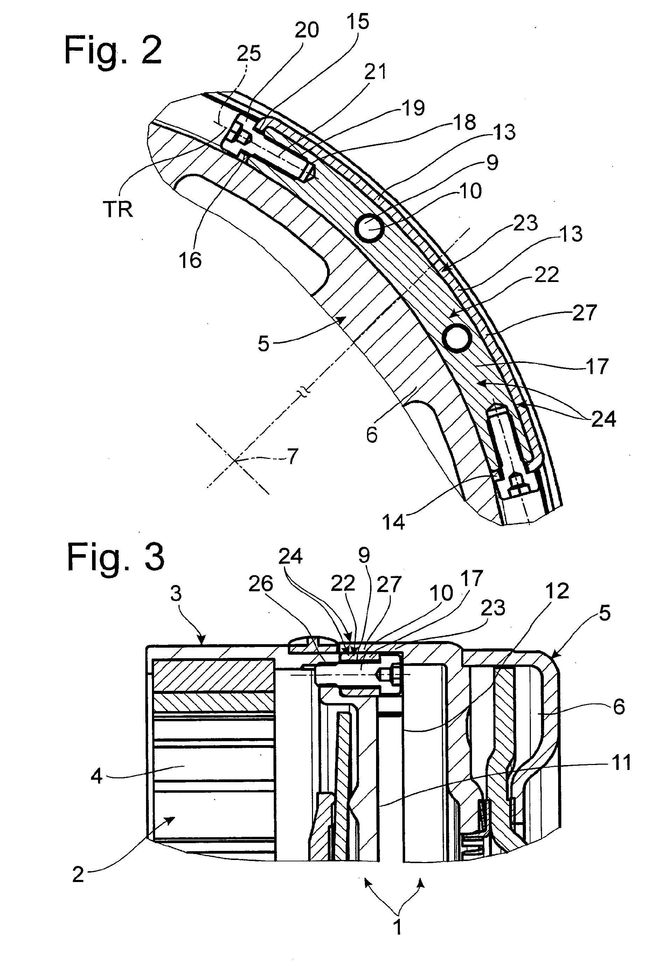

In der explosionsartigen Darstellung der Fig. 1 ist ein Ringsegment 17 als separates Bauteil herausgezeichnet, das im radial äußeren Bereich der antriebsseitigen Komponente 3 befestigt werden soll. Zu diesem Zweck verfügt das Ringsegment 17 über axiale Durchgangsbohrungen 9, welche für die Passage von Anbindungsmitteln 10 in Form von Schrauben dienen. Diese Anbindungsmittel 10 greifen, wie der Fig. 3 entnommen werden kann, in Gewindebohrungen 26 der antriebsseitigen Komponente 3, und sorgen, nach Festziehen, für eine drehfeste Verbindung des Ringsegmentes 17 mit der antriebseitigen Komponente 3.

Fig. 2 zeigt deutlich, dass das Ringsegment 17 mit einer an der abtriebsseitigen Komponente 5 vorgesehenen Anformung 13 zusammenwirkt, wobei diese Anformung 13 das Ringsegment 17 entlang eines wesentlichen Teils seines Außenumfangs umgreift, nämlich von radial außen sowie an beiden Umfangsenden. Die Anformung 13 wird durch einen Axialvorsprung 27 gebildet, der, ausgehend von einer abtriebsseitigen Koppelfläche 12 der abtriebsseitigen Komponente 5, sich in Richtung zur antriebsseitigen Komponente 3 erstreckt, die wiederum an ihrer der abtriebsseitigen Komponente 5 zugewandten Seite über eine antriebsseitige Koppelfläche 11 verfügt, die zur axialen Anlagerung des Ringsegmentes 17 dient. Zurückkommend auf den Axialvorsprung 27, verfügt dieser an seinen umfangsseitigen Endbereichen über laschenförmige Umbiegungen 14, die in bereits erläuterter Weise in Anlage an den entsprechenden Enden des Ringsegmentes 17 gelangen. Jede dieser Umbiegungen 14 ist mit jeweils einem Durchgang 15 in Form je einer Bohrung 16 ausgebildet, und wirkt diesbezüglich mit je einer Eingriffssicherung 18 in Form je eines Gewindeganges 19 im Ringsegment 17 zusammen. Dieses Zusammenwirken entsteht allerdings erst dann, wenn, wie aus Fig. 1 oder 2 hervorgeht, ein Befestigungselement 20 in Form einer Schraube 21 den jeweiligen Durchgang 15 der entsprechenden Umbiegung 14 durchdrungen hat und die Eingriffssicherung 18 durch Eindrehen des Befestigungselementes 20 in den jeweiligen Gewindegang 19 wirksam geworden ist. Kurz zusammengefasst, stellen die Befestigungselemente 20 damit die bereits genannte drehfeste Verbindungsanordnung 24 zwischen der antriebsseitigen Komponente 3 und der abtriebsseitigen Komponenten 5 des Antriebsstranges 1 her, wobei in dieser Verbindungsanordnung 24 das Ringsegment 17 als ein der antriebsseitigen Komponente 3 zugeordneter Mitnehmer 22 und die Anformung 13 als eine der abtriebsseitigen Komponente 5 zugeordnete Mitnahmeeinrichtung 23 wirksam ist. Sobald die Verbindungsanordnung 24 hergestellt ist, kann bei Einleitung einer Antriebsbewegung mittels der antriebsseitigen Komponente 3 eine Übertragung von Drehmoment auf die abtriebsseitige Komponente 5 erfolgen.

Wie in Fig. 2 deutlich erkennbar, ist bei dieser Ausführung vorgesehen, Längsachsen 25 der Befestigungselemente 20 gegenüber der Drehachse 7 zumindest im wesentlichen identisch mit einer gedachten Tangentialrichtung TR gegenüber der Drehachse 7, auszurichten. Aus Fig. 1 wiederum ergibt sich, dass die Befestigungselemente 20 in einer Ebene II ohne Achsversatz zueinander angeordnet sind, die zumindest im wesentlichen senkrecht zur Verlaufsrichtung der Drehachse 7 steht. Aufgrund der Anordnung der Befestigungselemente 20 in der Ebene II entsteht in Achsrichtung ein extrem geringer Bauraumbedarf zur Herstellung der Verbindungsanordnung 24, während durch Ausdehnung der Befestigungselemente 20 gemäß Fig. 2 in Tangentialrichtung eine problemfreie Übertragung von Drehmomenten um die Drehachse 7 sichergestellt ist, auch wenn höheren Drehmomenten die Torsionsschwingungen überlagert sein sollten. Die Erstreckungsrichtung der Befestigungselemente 20 ist in Fig. 2 durch die Längsachsen 25 der Befestigungselemente 20 symbolisiert, und zwar durch die jeweilige Bezeichnung mit dem Hinweis TR für die Tangentialrichtung.

Alternativ zur Darstellung in Fig. 1 können die Befestigungselemente 20 eines Mitnehmers 22 auch in unterschiedlichen Ebenen gegenüber der Verlaufsrichtung der Drehachse 7 vorgesehen sein, oder aber, bei Verwendung einer Mehrzahl von Mitnehmern 22, können sich die einzelnen Mitnehmer 22 bezüglich der Axialpositionierung ihrer jeweiligen Befestigungselemente 20 voneinander unterscheiden.

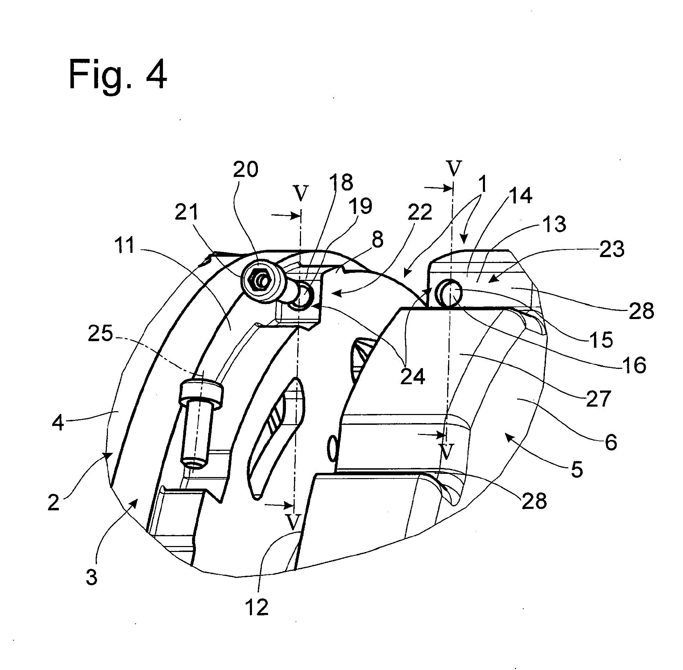

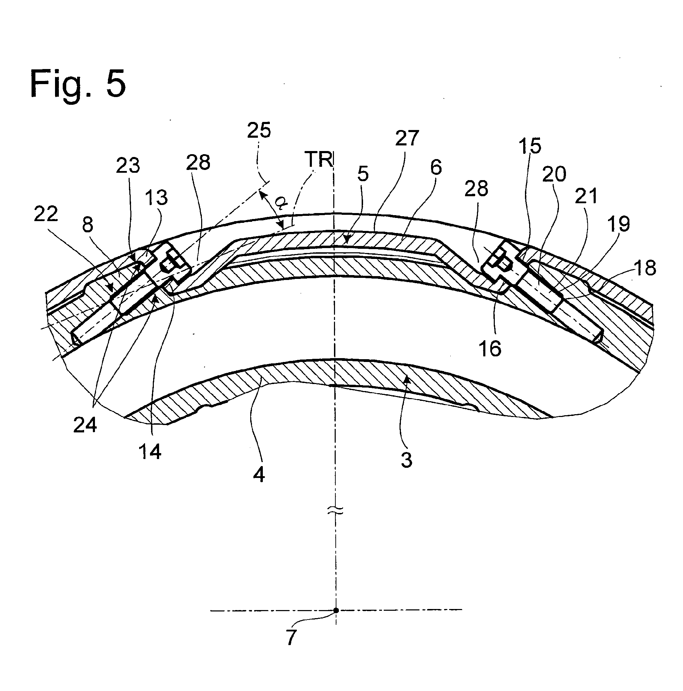

Selbstverständlich besteht diese Möglichkeit der Anordnung der Befestigungselemente 20 in gleichen oder aber in unterschiedlichen Ebenen auch bei der Ausführung gemäß den Fig. 4 oder 5. Abweichend von der bislang behandelten Ausführung sind die Mitnehmer 22 bei Fig. 4 durch Anformungen 8 an der antriebsseitigen Komponente 3 gebildet, wobei diese Anformungen 8 beispielsweise durch gießtechnische Herstellung gemeinsam mit der restlichen antriebsseitigen Komponente 3 integral ausgebildet sein können. Zur besseren Unterscheidbarkeit sollen bei dieser Ausführung die Anformungen 8 der antriebsseitigen Komponente 3 als erste Anformungen und die Anformungen 13 der abtriebsseitigen Komponente 5 als zweite Anformungen bezeichnet werden. Was die Mitnahmeeinrichtung 23 betrifft, so ist bei der Ausführung nach Fig. 4 und 5 der Axialvorsprung 27 in Umfangsrichtung durch radiale Einkerbungen 28 unterbrochen, wodurch eine Anpassung an die Profilierung der antriebsseitigen Komponente 3 erzielt wird. Auch hier dienen die Befestigungselemente 20 nach Passage der Durchgänge 15 zur Herstellung der Verbindungsanordnung 24, bei welcher Mitnehmer 22 und Mitnahmeeinrichtung 23 drehfest miteinander sind, indem das jeweilige Befestigungselement 20 in den entsprechenden, als Eingriffssicherung 18 wirksamen Gewindegang 19 eingedreht ist.

Abweichend zur Ausführung nach den Fig. 1 bis 3 sind die Befestigungselemente 20, wie Fig. 5 deutlich erkennen lässt, nicht tangential zur Drehachse 7 ausgerichtet, sondern weichen mit ihren Längsachsen 25 um einen vorbestimmten Winkel α von einer gedachten Tangentialrichtung TR ab. Im vorliegenden Fall ist der Winkel α, ausgehend von der gedachten Tangentialrichtung TR, nach radial außen eingezeichnet, kann aber ebenso auch nach radial innen verlagert sein. Allerdings gestaltet sich bei der in Fig. 5 einzeichneten Abweichungsrichtung das Eindrehen der Befestigungselemente 20 vorteilhafter, als dies bei entgegengesetzter Auslenkrichtung der Fall wäre.

Der Winkel α der Längsachse 25 des Befestigungselementes 20 gegenüber der gedachten Tangentialrichtung TR liegt innerhalb eines Wertebereiches WB, der sich zwischen einem Minimalwert Wₘᵢₙ und einem Maximalwert Wₘₐₓ erstreckt. Der Minialmwert Wₘᵢₙ von α liegt bei 0 Grad und stellt somit die in Fig. 2 gezeigte Ausführung dar, bei welcher die Längsachse 25 des jeweiligen Befestigungselementes 20 mit der gedachten Tangentialrichtung TR zusammenfällt. Der Maximalwert Wₘₐₓ kann dagegen bis unmittelbar an einen Betrag von nahezu 90 Grad angenähert sein, so dass das Befestigungselement 20 gegenüber der Drehachse 7 nahezu radial ausgerichtet ist. Mit besonderem Vorzug sind selbstverständlich sämtliche Zwischenwerte zwischen dem Minimalwert Wₘᵢₙ und dem Maximalwert Wₘₐₓ des Wertebereiches WB einstellbar.

### Bezugsziffernliste

- 1: Antriebsstrang
- 2: Antrieb
- 3: Antriebsseitige Komponente
- 4: Elektrische Maschine
- 5: Abtriebsseitige Komponente
- 6: Torsionsschwingungsdämpfer
- 7: Drehachse
- 8: Erste Anformungen
- 9: Durchgangsbohrungen
- 10: Anbindungsmittel
- 11: Antriebsseitige Koppelfläche
- 12: Abtriebsseitige Koppelfläche
- 13: Zweite Anformungen
- 14: Laschenförmige Umbiegungen
- 15: Durchgänge
- 16: Bohrungen
- 17: Ringsegment
- 18: Eingriffssicherungen
- 19: Gewindegänge
- 20: Befestigungselemente
- 21: Schrauben
- 22: Mitnehmer
- 23: Mitnahmeeinrichtung
- 24: Verbindungsanordnung
- 25: Längsachsen
- 26: Gewindebohrungen
- 27: Axialvorsprung
- 28: Radiale Einkerbungen

## Patentansprüche

1. Verbindungsanordnung zur drehfesten Koppelung zumindest zweier Komponenten eines Antriebsstranges eines Kraftfahrzeuges unter Verwendung von Befestigungselementen mit Längsachsen, deren Erstreckungsrichtung zumindest im wesentlichen mit jeweils einer Ebene zusammenfällt, die senkrecht zur Verlaufsrichtung einer Drehachse des Antriebsstranges ausgerichtet ist,
**dadurch gekennzeichnet,**
**dass** die Befestigungselemente (20) bezüglich der Erstreckungsrichtungen ihrer Längsachsen (25) jeweils von der auf die Drehachse (7) bezogenen Radialrichtung abweichen, und in einer vorbestimmten Anzahl der senkrecht zur Verlaufsrichtung der Drehachse (7) des Antriebsstranges (1) ausgerichteten Ebenen angeordnet sind.

2. Verbindungsanordnung nach Anspruch 1,
**dadurch gekennzeichnet,**
**dass** die Befestigungselemente (20) bezüglich der Erstreckungsrichtungen ihrer Längsachsen (25) jeweils, ausgehend von je einer auf die Drehachse (7) bezogenen Tangentialrichtung (TR), unter vorbestimmtem Winkel (α) gegenüber dieser Tangentialrichtung (TR) ausgerichtet sind.

3. Verbindungsanordnung nach Anspruch 2,
**dadurch gekennzeichnet,**
**dass** der vorbestimmte Winkel (α) aus einem durch einen Minimalwert (Wₘᵢₙ) und einen Maximalwert (Wₘₐₓ) begrenzten Wertebereich (WB) beliebig auswählbar ist, wobei der Minimalwert (Wₘᵢₙ) von 0 Grad eine Übereinstimmung der Erstreckungsrichtung der jeweiligen Längsachse (25) des Befestigungselementes (20) mit der Tangentialrichtung (TR) erbringt, der Maximalwert mit einem Betrag von nahezu 90 Grad dagegen eine Annäherung der Erstreckungsrichtung der jeweiligen Längsachse (25) des Befestigungselementes (20) unmittelbar an die auf die Drehachse (7) bezogene Radialrichtung.

4. Verbindungsanordnung nach einem der Ansprüche 1 bis 3, bei welcher eine antriebsseitige Komponente des Antriebsstranges wenigstens einen Mitnehmer mit zumindest einem Durchgang für wenigstens ein Befestigungselement aufweist, während eine abtriebsseitige Komponente des Antriebsstranges über wenigstens eine Mitnahmeeinrichtung mit zumindest einer Eingriffssicherung für wenigstens ein Befestigungselement verfügt,
**dadurch gekennzeichnet,**
**dass** der Mitnehmer (22) durch zumindest eine an der antriebsseitigen Komponente (3) vorgesehene erste Anformung (8) oder durch zumindest ein mit der antriebsseitigen Komponente (3) drehfestes Ringsegment (17) gebildet ist und zumindest in Umfangsrichtung in Drehverbindung mit wenigstens einer an der abtriebsseitigen Komponente (5) vorgesehenen, als Mitnahmeeinrichtung (23) wirksamen zweiten Anformung (13) verbunden ist.

5. Verbindungsanordnung nach Anspruch 4,
**dadurch gekennzeichnet,**
**dass** die Drehverbindung zwischen dem Mitnehmer (22) und der Mitnahmeeinrichtung (23) durch formschlüssiges Ineingrifftreten zumindest in Umfangsrichtung hergestellt ist.

6. Verbindungsanordnung nach Anspruch 4 oder 5,
**dadurch gekennzeichnet,**
**dass** die zweite Anformung (13) integral an der abtriebsseitigen Komponente (5) vorgesehen ist.

7. Verbindungsanordnung nach einem der Ansprüche 1 bis 6 mit Befestigungselementen in Form von Schrauben, Durchgängen in Form von Bohrungen und Eingriffssicherungen in Form von Gewindegängen,
**dadurch gekennzeichnet,**
**dass** die erste Anformung (8) oder das Ringsegment (17) die Gewindegänge (19) für die jeweiligen Schrauben (21) und die zweite Anformung (13) die Bohrungen (16) für diese Schrauben (21) und aufweist.

8. Verbindungsanordnung nach einem der Ansprüche 1 bis 7,
**dadurch gekennzeichnet,**
**dass** die antriebsseitige Komponente (3) durch eine elektrische Maschine (4) gebildet wird, die abtriebsseitige Komponente (5) dagegen durch einen Torsionsschwingungsdämpfer (6).

## Geänderte Patentansprüche

### Geänderte Patentansprüche gemäss Regel 86(2) EPÜ.

**1.** Verbindungsanordnung zur drehfesten Koppelung zumindest zweier Komponenten eines Antriebsstranges (1) eines Kraftfahrzeuges unter Verwendung von Befestigungselementen (20) mit Längsachsen, deren Erstreckungsrichtung zumindest im wesentlichen mit jeweils einer Ebene zusammenfällt, die senkrecht zur Verlaufsrichtung einer Drehachse (7) des Antriebsstranges (1) ausgerichtet ist, wobei die Befestigungselemente (20) bezüglich der Erstreckungsrichtungen ihrer Längsachsen (25) jeweils von der auf die Drehachse (7) bezogenen Radialrichtung abweichen, und in einer vorbestimmten Anzahl der senkrecht zur Verlaufsrichtung der Drehachse (7) des Antriebsstranges (1) ausgerichteten Ebenen angeordnet sind,
**dadurch gekennzeichnet,**
**dass** die Befestigungselemente (20) bezüglich der Erstreckungsrichtungen ihrer Längsachsen (25) jeweils, ausgehend von je einer auf die Drehachse (7) bezogenen Tangentialrichtung (TR), unter vorbestimmtem Winkel (α) gegenüber dieser Tangentialrichtung (TR) ausgerichtet sind.

**2.** Verbindungsanordnung nach Anspruch 1, bei welcher eine antriebsseitige Komponente des Antriebsstranges wenigstens einen Mitnehmer mit zumindest einem Durchgang für wenigstens ein Befestigungselement aufweist, während eine abtriebsseitige Komponente des Antriebsstranges über wenigstens eine Mitnahmeeinrichtung mit zumindest einer Eingriffssicherung für wenigstens ein Befestigungselement verfügt,
**dadurch gekennzeichnet,**
**dass** der Mitnehmer (22) durch zumindest ein mit der antriebsseitigen Komponente (3) drehfestes Ringsegment (17) gebildet ist und zumindest in Umfangsrichtung in Drehverbindung mit wenigstens einer an der abtriebsseitigen Komponente (5) vorgesehenen, als Mitnahmeeinrichtung (23) wirksamen zweiten Anformung (13) verbunden ist, die integral an der abtriebsseitigen Komponente (5) vorgesehen ist.

**3.** Verbindungsanordnung nach Anspruch 1 oder 2,
**dadurch gekennzeichnet,**
**dass** die antriebsseitige Komponente (3) durch eine elektrische Maschine (4) gebildet wird, die abtriebsseitige Komponente (5) dagegen durch einen Torsionsschwingungsdämpfer (6).
